(19) Europäisches Patentamt

European Patent Office

Office européen des brevets

(11) EP 0 925 461 B1

(12) **EUROPÄISCHE PATENTSCHRIFT**

(45) Veröffentlichungstag und Bekanntmachung des Hinweises auf die Patenterteilung:
**06.12.2000 Patentblatt 2000/49**

(51) Int Cl.⁷: **G10L 15/00**, G10L 15/06, G10L 15/14

(21) Anmeldenummer: 97943730.8

(22) Anmeldetag: **02.09.1997**

(86) Internationale Anmeldenummer:
**PCT/DE97/01923**

(87) Internationale Veröffentlichungsnummer:
**WO 98/11537 (19.03.1998 Gazette 1998/08)**

(54) **VERFAHREN ZUR MEHRSPRACHENVERWENDUNG EINES HIDDEN MARKOV LAUTMODELLES IN EINEM SPRACHERKENNUNGSSYSTEM**

PROCESS FOR THE MULTILINGUAL USE OF A HIDDEN MARKOV SOUND MODEL IN A SPEECH RECOGNITION SYSTEM

PROCEDE POUR L'UTILISATION MULTILINGUE D'UN MODELE SONORE MARKOVIEN CACHE DANS UN SYSTEME DE RECONNAISSANCE VOCALE

(84) Benannte Vertragsstaaten:
FR GB IT SE

(30) Priorität: **10.09.1996 DE 19636739**

(43) Veröffentlichungstag der Anmeldung:
**30.06.1999 Patentblatt 1999/26**

(73) Patentinhaber: SIEMENS AKTIENGESELLSCHAFT
80333 München (DE)

(72) Erfinder: **KÖHLER, Joachim**
**D-59069 Hamm (DE)**

(56) Entgegenhaltungen:
• KOHLER J: "Multi-lingual phoneme recognition exploiting acoustic-phonetic similarities of sounds" PROCEEDINGS ICSLP 96. FOURTH INTERNATIONAL CONFERENCE ON SPOKEN LANGUAGE PROCESSING (CAT. NO.96TH8206), PROCEEDING OF FOURTH INTERNATIONAL CONFERENCE ON SPOKEN LANGUAGE PROCESSING. ICSLP '96, PHILADELPHIA, PA, USA, 3-6 OCT. 1996, ISBN 0-7803-3555-4, 1996, NEW YORK, NY, USA, IEEE, USA, Seiten 2195-2198 vol.4, XP002052398
• P.DALSGAARD, O.ANDERSEN, W.BARRY: "Data-Driven Identification of Poly- and Mono-Phonemes for four European Languages" PROCEEDINGS OF EUROSPEECH 93, 1993, BERLIN, Seiten 759-762, XP002052399
• WHEATLEY B ET AL: "An evaluation of cross-language adaptation for rapid HMM development in a new language" ICASSP-94. 1994 IEEE INTERNATIONAL CONFERENCE ON ACOUSTICS, SPEECH AND SIGNAL PROCESSING (CAT. NO.94CH3387-8), PROCEEDINGS OF ICASSP '94. IEEE INTERNATIONAL CONFERENCE ON ACOUSTICS, SPEECH AND SIGNAL PROCESSING, ADELAIDE, SA, AUSTRALIA, 19-22 APRIL 1, ISBN 0-7803-1775-0, 1994, NEW YORK, NY, USA, IEEE, USA, Seiten I/237-40 vol.1, XP002052421
• V.DIGALAKIS, A.SANKAR, F.BEAUFAYS: "Training Data Clustering For Improved Speech Recognition" PROCEEDINGS OF EUROSPEECH 95, 1995, MADRID, Seiten 503-506, XP002052400
• DUGAST C ET AL: "APPLICATION OF CLUSTERING TECHNIQUES TO MIXTURE DENSITY MODELLING FOR CONTINUOUS-SPEECH RECOGNITION" PROCEEDINGS OF THE INTERNATIONAL CONFERENCE ON ACOUSTICS, SPEECH, AND SIGNAL PROCESSING (ICASSP), DETROIT, MAY 9 - 12, 1995 SPEECH, Bd. VOL. 1, 9.Mai 1995, INSTITUTE OF ELECTRICAL AND ELECTRONICS ENGINEERS, Seiten 524-527, XP000658046

**Beschreibung**

Die Erfindung bezieht sich auf hidden Markov Modelle für Spracherkennungssyteme, wobei ein solches Modell für mehrere Sprachheiten herangezogen werden soll, indem die akustischen und phonetischen Ähnlichkeiten zwischen den unterschiedlichen Sprachen ausgenutzt werden.

Bei der Spracherkennung besteht ein großes Problem darin, daß für jede Sprache in welche die Spracherkennungstechnologie eingeführt werden soll, neue akustisch phonetische Modelle trainiert werden müssen um eine Länderanpassung durchführen zu können. Meistens werden bei gängigen Spracherkennungssystemen hidden Markov Modelle zur Modellierung der sprachspezifischen Laute verwendet. Aus diesen statistisch modellierten Lautmodellen werden im Anschluß akustische Wortmodelle zusammengefügt, welche während eines Suchprozesses beim Spracherkennungsvorgang erkannt werden. Zum Training dieser Lautmodelle werden sehr umfangreiche Sprachdatenbanken benötigt, deren Sammlung und Aufbereitung einen äußerst kosten- und zeitintensiven Prozeß darstellt. Hierdurch entstehen Nachteile bei der Portierung einer Spracherkennungstechnologie von einer Sprache in eine weitere Sprache, da die Erstellung einer neuen Sprachdatenbank einerseits eine Verteuerung des Produktes bedeutet und andererseits eine zeitliche Verzögerung bei der Markteinführung bedingt.

In gängigen erwerbbaren Spracherkennungssystemen werden ausschließlich sprachspezifische Modelle verwendet. Zur Portierung dieser Systeme in eine neue Sprache werden umfangreiche Sprachdatenbanken gesammelt und aufbereitet. Anschließend werden die Lautmodelle für die neue Sprache mit diesen gesammelten Sprachdaten von Grund auf neu trainiert.

Um den Aufwand und die Zeitverzögerung bei der Portierung von Spracherkennungssystemen in unterschiedliche Sprachen zu verringern, sollte also untersucht werden, ob einzelne Lautmodelle für die Verwendung in verschiedenen Sprachen geeignet sind. Hierzu gibt es in [2] bereits Ansätze mehrsprachige Lautmodelle zu erstellen und diese bei der Spracherkennung in den jeweiligen Sprachen einzusetzen. Dort werden auch die Begriffe Poly- und Monophoneme eingeführt. Wobei Polyphoneme Laute bedeuten, deren Lautbildungseigenschaften über mehrere Sprachen hinweg ähnlich genug sind, um gleichgesetzt zu werden.

Mit Monophonemen werden Laute bezeichnet, welche sprachspezifische Eigenschaften aufweisen. Um für solche Entwicklungsarbeiten und Untersuchungen nicht jedesmal neue Sprachdatenbanken trainieren zu müssen, stehen solche schon als Standard zur Verfügung [4], [7].

Aus [6] ist bekannt, besondere Phoneme und Hidden-Markovlautmodelle dieser Phoneme für eine multilingualistische Spracherkennung zu verwenden.

Ein weiterer Stand der Technik zur mehrsprachigen Verwendung von Lautmodellen ist nicht bekannt.

Die der Erfindung zugrundeliegende Aufgabe besteht demnach darin, ein Verfahren zur Mehrsprachenverwendung eines hidden Markov Lautmodelles in einem Spracherkennungssysten anzugeben, durch welches der Portierungsaufwand von Spracherkennungssystemen in eine andere Sprache minimiert wird, indem die Parameter in einem multilingualen Spracherkennungssytem reduziert werden.

Diese Aufgabe wird gemäß den Merkmalen der Patentansprüche 1 und 6 gelöst.

Weiterbildungen der Erfindung ergeben sich aus den abhängigen Ansprüchen.

Ein besonderer Vorteil des erfindungsgemäßen Verfahrens besteht darin, daß ein statistisches Ähnlichkeitsmaß angegeben wird, welches es erlaubt, aus einer gegebenen Anzahl von verschiedenen Lautmodellen für ähnliche Laute in unterschiedlichen Sprachen dasjenige Lautmodell auszuwählen, welches in seiner Charakteristik alle zur Verfügung stehenden Merkmalsvektoren der jeweiligen Laute am besten beschreibt.

Besonders vorteilhaft wird als Maß für die Auswahl des besten hidden Markov Modelles für unterschiedliche Lautmerkmalsvektoren der logarithmische Wahrscheinlichkeitsabstand zwischen den jeweiligen hidden Markov Modellen und einem jeden Merkmalsvektor ermittelt. Hierdurch wird ein Maß zur Verfügung gestellt, welches experimentelle Befunde bezüglich der Ähnlichkeit von einzelnen Lautmodellen und deren Erkennungsraten widerspiegelt.

Besonders vorteilhaft wird als Maß für die Beschreibung eines möglichst repräsentativen hidden Markov Lautmodelles nach der Erfindung der arithmetische Mittelwert der logarithmischen Wahrscheinlichkeitsabstände zwischen jedem hidden Markov Modell und den jeweiligen Merkmalsvektoren gebildet, da hierdurch ein symmetrischer Abstandswert erhalten wird.

Vorteilhaft wird das erfindungsgemäße Beschreibungsmaß für die repräsentative Eigenschaft eines hidden Markov Modells zur Beschreibung von Lauten in unterschiedlichen Sprachen dadurch gebildet, daß die erfindungsgemäßen Gleichungen 1 bis 3 angewendet werden, da hierdurch ein geringer Rechenaufwand entsteht.

Besonders vorteilhaft wird für die erfindungsgemäße Anwendung eines Beschreibungsmaßes eine Schrankenbedingung vorgegeben, mit der eine Erkennungsrate des repräsentierenden hidden Markov Modells eingestellt werden kann.

Besonders vorteilhaft wird durch das erfindungsgemäße Verfahren der Speicheraufwand für eine Sprachbibliothek reduziert, da ein Modell für mehrere Sprachen verwendet werden kann und ebenfalls der Portierungsaufwand von einer Sprache in die andere minimiert, was einen reduzierten Zeitaufwand für die Portierung bedingt. Ebenso wird vorteilhaft wird ein geringerer Rechenaufwand bei der Viterbi-Suche ermöglicht, da beispielsweise bei mehrsprachigen Eingabesystemen weniger Modelle überprüft werden müssen.

Besonders vorteilhaft werden bei der Erfindung besondere hidden Markov Modelle zur Verwendung in mehrsprachigen Spracherkennungssystemen generiert. Durch die erfindungsgemäße Vorgehensweise können hidden Markov Lautmodelle für Laute in mehreren Sprachen zu Polyphonem-Modellen zusammengefaßt werden. Hierzu werden Überlappungsbereiche der verwendeten Standardwahrscheinlichkeitsdichteverteilungen bei den unterschiedlichen Modellen untersucht. Zur Beschreibung des Polyphonem-Modelles kann eine beliebige Anzahl von identisch bei den unterschiedlichen Modellen verwendeten Standardwahrscheinlichkeitsdichteverteilungen herangezogen werden. Experimentelle Befunde haben gezeigt, daß vorteilhaft auch mehrere Standardverteilungen aus unterschiedlichen Sprachmodellen verwendet werden können, ohne daß die hierdurch bewirkte Verwischung der einzelnen Sprachcharakteristika zu einer signifikant niedrigeren Erkennungsrate beim Einsatz dieses Modells führen würde. Als besonders vorteilhaft hat sich hier der Abstandsschwellenwert fünf zwischen ähnlichen Standardwahrscheinlichkeitsverteilungsdichten bewährt.

Besonders vorteilhaft werden beim Einsatz des erfindungsgemäßen Verfahrens die hidden Markov Modelle mit drei Zuständen aus Anlaut, Mittellaut und Ablaut modelliert, da hierdurch eine hinreichende Genauigkeit bei der Beschreibung der Laute erzielt wird und der Rechenaufwand bei der Erkennung in einem Spracherkenner gering bleibt.

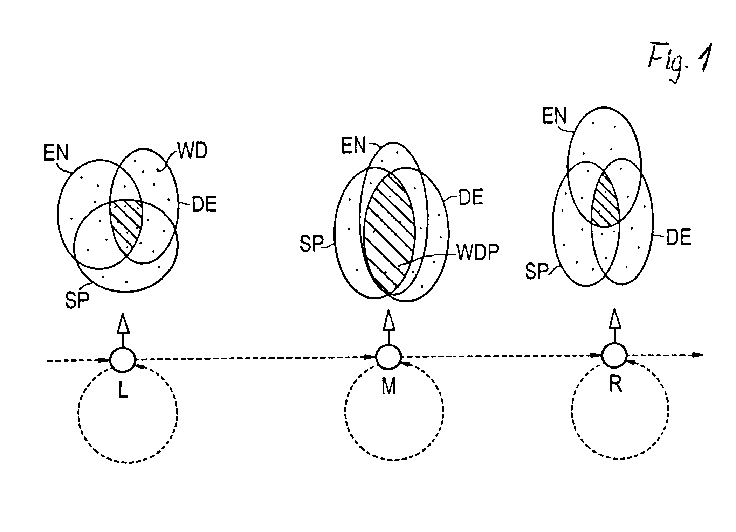

Figur 1 zeigt dabei beispielhaft den Aufbau eines einzigen Multilingualen Phonemes. In diesem Fall ist es das Phonem M was dargestellt wird. Die Zahl der Wahrscheinlichkeitsdichten und die Erkennungsrate für dieses Phonem sind in Tabelle 4 angegeben.

| Thr. | #densit(a,b,c). | Engl.[%] | Germ.[%] | Span.[%] |
|---|---|---|---|---|
| 0 | 341(0 0 341) | 46.7 | 44.7 | 59.4 |
| 2 | 334(0 14 327) | 45.0 | 46.4 | 57.5 |
| 3 | 303(27 34 280) | 48.0 | 45.8 | 57.5 |
| 4 | 227(106 57 187) | 50.9 | '44.1 | 58.7 |
| 5 | 116(221, 48,72) | 49.3 | 43.1 | 57.0 |
| 6 | 61(285, 22, 34) | 41.2 | 38.6 | 50.4 |

In Figur 1 ist der Anlaut L, der Mittellaut M und der Ablaut R des Phonem-Modelles dargestellt. Für die unterschiedlichen Sprachen Englisch EN, Deutsch DE und Spanisch SP sind die Schwerpunkte der Wahrscheinlichkeitdichtevertellungen der einzelnen verwendeten Standardwahrscheinlichkeitdichten eingetragen und als WD gekennzeichnet. Hier ist beispielsweise ein hidden Markov Modell aus drei Teilzuständen dargestellt. Die Erfindung soll jedoch nicht lediglich auf solche hidden Markov Modelle beschränkt werden, obwohl diese unter Berücksichtigung des Kriteriums, das ein minimaler Rechenaufwand der Erkennung durchgeführt werden soll ein gewisses Optimum darstellen. Die Erfindung kann ebenso auf hidden Markov Modelle angewendet werden, die eine andere Anzahl von Zuständen aufweisen. Durch die Erfindung soll insbesondere erreicht werden, daß der Portierungsaufwand bei der Portierung von Spracherkennungssystemen in eine andere Sprache reduziert wird und daß die verwendeten Rechenresourcen durch Reduktion der zugrundeliegenden Parameter möglichst gering gehalten werden. Beispielsweise können durch derartige Spracherkennungssysteme begrenzte Hardwareerfordernisse besser erfüllt werden, insbesondere wenn ein- und dasselbe Spracherkennungssystem für Mehrsprachenanwendung in einem Gerät zur Verfügung gestellt werden soll.

Zunächst sollte um das Ziel der Erfindung zu erreichen, die Ähnlichkeiten von Lauten in unterschiedlichen Sprachen auszuschöpfen und beim Modellieren zu berücksichtigen, beachtet werden, daß sich die Phoneme in verschiedenen Sprachen unterscheiden können. Die Gründe hierfür bestehen vor allen Dingen in:

- Unterschiedlichen phonetischen Kontexten, wegen der unterschiedlichen Phonemsätze in den verschiedenen Sprachen;
- unterschiedlichen Sprechweisen;
- verschiedenen prosodischen Merkmalen;
- unterschiedlichen allophonischen Variationen.

Ein besonders wichtiger Aspekt, welcher dabei zu berücksichtigen ist, besteht im Prinzip der genügenden wahrnehmungstechnischen Unterscheidbarkeit der Phoneme [5]. Dies bedeutet, daß einzelne Laute in verschiedenen Sprachen akustisch unterscheidbar gehalten werden, so daß es für den einzelnen Zuhörer leichter ist sie voneinander zu separieren. Da aber jede einzelne Sprache einen unterschiedlichen Phonemschatz hat, werden die Grenzen zwischen zwei ähnlichen Phonemen in jeder einzelnen Sprache sprachspezifisch festgelegt. Aus diesen Gründen hat die Ausprägung eines bestimmten Lautes eine sprachspezifische Komponente.

Bevorzugt werden die Phoneme mittels kontinuierlichen dichten hidden Markov Modellen (CD-HMM) modelliert [3]. Als dichte Funktionen werden häufig Laplace-Mischungen benutzt. Bevorzugt besteht dabei jedes einzelne Phonem aus drei Zuständen von links nach rechts gerichteten HMM. Die akustischen Merkmalsvektoren bestehen dabei beispielsweise aus 24 mel-skalierten cepstral, 12 delta cepstral, 12 delta delta cepstral, Energie, delta-Energie und delta delta -Energie-Koeffizienten. Beispielsweise wird als Länge des Untersuchungszeitfensters 25 ms gewählt, wobei die Rahmenabstände 10 ms zwischen den einzelnen Rahmen betragen. Aus Gründen der begrenzten Größe des Sprachkorpus werden bevorzugt lediglich kontextunabhängige Phoneme generiert. Als besonders repräsentatives Phoneminventar wurde jenes aus [4] gewählt.

Die Idee der Erfindung besteht dabei darin, daß zum einen ein Ähnlichkeitsmaß zur Verfügung gestellt wird, um aus standardmäßig verfügbaren Sprachphonembibliotheken für unterschiedliche Sprachen jenes hidden Markov Modell auswählen zu können, welches den Merkmalsvektoren, die aus den unterschiedlichen Lautmodellen der unterschiedlichen Sprachen abgeleitet werden, am nächsten kommt. Hierdurch ist es möglich, die Ähnlichkeiten zweier Phonem-Modelle zu ermitteln und über dieses Ähnlichkeitenmaß basierend auf der Differenz der Log-Likelihood-Werte zwischen den Lautrealisierungen und Lautmodellen eine Aussage zu treffen, ob es sich lohnt, einen Laut für mehrere Sprachen gemeinsam zu modellieren, bzw. ein betreffendes schon bestehendes hidden Markov Modell für die Modellierung des Lautes in mehreren Sprachen zu verwenden. Hierdurch wird die Zahl der Parameter, welche bei der Spracherkennung zu berücksichtigen sind reduziert, indem die Zahl der zu untersuchenden hidden Markov Modelle reduziert wird.

Ein zweiter Lösungsansatz der Erfindung besteht darin, ein spezielles Polyphonem-Modell zur Modellierung eines Lautes in mehreren Sprachen zu erstellen. Hierzu werden zunächst beispielsweise drei Lautsegmente, in Form eines Anlautes, Mittellautes und Ablautes gebildet, deren Zustände aus mehreren Wahrscheinlichkeitdichtefunktionen den sogenannten Mischverteilungsdichten mit den dazugehörigen Dichten bestehen. Diese Dichten der über verschiedenen Sprachen ähnlichen Lautsegmente werden zu einem multilingualen Codebuch zusammengefaßt. Somit teilen sich Lautsegmente verschiedener Sprachen die gleichen Dichten. Während das Codebuch für mehrere Sprachen gleichzeitig benutzt werden kann, werden beispielsweise die Gewichte, mit denen die Dichten gewichtet werden für jede Sprache getrennt ermittelt.

Zur Bildung eines geeigneten Ähnlichkeitsmaßes werden bevorzugt hidden Markov Modelle mit drei Zuständen herangezogen. Das Abstands- oder Ähnlichkeitsmaß kann dabei benutzt werden um mehrere Phonem-Modelle zu einem multilingualen Phonem-Modell zusammenzufassen oder diese auf geeignete Weise zu ersetzen. Hierdurch kann ein multilingualer Phonemschatz entwickelt werden. Bevorzugt wird zur Messung des Abstandes bzw. zur Bestimmung der Ähnlichkeit von zwei Phonem-Modellen des selben Lautes aus unterschiedlichen Sprachen eine Meßgröße verwendet, welche auf der relativen Entropie basiert [1]. Während des Trainings werden dabei die Parameter der gemischten Laplacedichteverteilungen der Phonem-Modelle bestimmt. Weiterhin wird für jedes Phonem ein Satz von Phonemtokens X als Merkmalsvektor aus einem Test- oder Entwicklungssprachkorpus extrahiert. Diese Phoneme können dabei durch ihr international genormtes phonetisches Etikett markiert sein. Gemäß der Erfindung werden zwei Phonem-Modelle $\lambda_i$ und $\lambda_j$ und ihre zugehörigen Phonemtoken $X_i$ und $X_j$ zur Bestimmung des Ähnlichkeitsmaßes zwischen diesen unterschiedlichen Phonemen wie folgt behandelt.

$$d(\lambda_i, \lambda_j) = \log p(X_i|\lambda_i) - \log p(X_i|\lambda_j) \qquad (1)$$

Dieses Abstandsmaß kann als Log-Likelihood-Abstand angesehen werden, welcher darstellt wie gut zwei verschiedene Modelle zu dem selben Merkmalsvektor $X_l$ passen. Demgemäß wird der Abstand zwischen den beiden Modellen $\lambda_i$ und $\lambda_j$ gemäß:

$$d(\lambda_j, \lambda_i) = \log p(X_j|\lambda_j) - \log p(X_j|\lambda_i) \qquad (2)$$

bestimmt. Um einen symmetrischen Abstand zwischen diesen beiden Phonem-Modellen zu erhalten, wird dieser bevorzugt gemäß

$$d(\lambda_j; \lambda_i) = \frac{1}{2}(d(\lambda_i, \lambda_j) + d(\lambda_j; \lambda_i)) \qquad (3)$$

bestimmt. Anhand von experimentellen befunden konnte festgestellt werden, daß sich durchaus einige Phonem-Modelle aus anderen Sprachen besser für die Verwendung in einem deutschen Spracherkennungssystem eignen, als ein deutsches Phonem-Modell. Beispielsweise gilt dies für die Phoneme k, p und N. Für diese Phoneme eignet sich das englische Phonem-Modell besser als das deutsche. Während beispielsweise ein großer Unterschied zwischen dem deutschen und dem englischen Modell über den Umlaut aU beobachtet wurde, was bedeutet, daß für beide Laute ein unterschiedliches Symbol im multilingualen Phonemschatz eingeführt werden sollte. Andererseits konnte für den Umlaut aI im deutschen und im englischen eine große Ähnlichkeit festgestellt werden, das bedeutet, daß lediglich ein Phonem-Modell für beide Sprachen gleich gut Verwendung finden kann. Ausgehend davon sollte für jedes Symbol eines multilingualen Phonemschatzes ein separates statistisches Modell erzeugt werden. In [6] wurden Polyphoneme als solche Phoneme bezeichnet, die ähnlich genug sind, um in verschiedenen Sprachen als ein einziges Phonem modelliert zu werden. Ein Nachteil dieser Vorgehensweise besteht darin, daß für die sprachspezifische Erkennung der vollständige akustische Raum des Polyphonems verwendet wird. Die Erfindung hat es jedoch zum Ziel, die sprachabhängigen und die sprachspezifischen akustischen Eigenschaften eines multilingualen Modells zu kombinieren. Gemäß der Erfindung sollen in einem Polyphonem-Modell solche Bereiche des akustischen Raumes eingegrenzt werden, in denen sich die verwendeten Wahrscheinlichkeitdichten der einzelnen Phoneme überlappen. Hierzu wird z.B. eine gruppierende Verdichtungstechnik (agglommerative density clustering technique) eingesetzt, um gleiche oder ähnliche Ausprägungen eines Phonems zu reduzieren. Besonders wichtig ist es dabei zu beachten, daß lediglich die Dichten der korrespondierenden Zustände der einzelnen hidden Markov Modelle in den Phonemen zusammengefaßt werden dürfen.

In Figur 1 ist dabei zu erkennen, daß die jeweiligen Dichten für die einzelnen Zustände L, M und R in den eingegrenzten Regionen enthalten sind. Während identische Dichten über die einzelnen Sprachen EN, DE, und SP verteilt sind, variieren die Mischungsgewichte sprachabhängig. Bei dieser Bewertung sollte jedoch auch berücksichtigt werden, daß spezifische Ausprägungen eines Phonems in verschiedenen Sprachen in unterschiedlicher Häufigkeit auftreten.

Die Zusammenfassung der unterschiedlichen Wahrscheinlichkeitsdichten kann dabei mit einem unterschiedlichen Abstandsschwellenwert für die Wahrscheinlichkeitsdichten bei der Dichtehäufung (density clustering) durchgeführt werden. Beispielsweise wurde mit einem Abstandsschwellenwert von fünf die Zahl der verwendeten Dichten um einen Faktor 3 gegenüber dem Ausgangszustand reduziert, ohne damit eine entscheidende Verschlechterung bei der Spracherkennungsrate einher ging. In diesem Fall wurden 221, 48 und 72 von den ursprünglichen 341 Ausgangsdichten für jeweils die Polyphonem-Region, die Zweisprachen-Region und die Einsprachen-Region zusammengefaßt. In Figur 1 ist eine solche Polyphonemregion als Schnittmenge der Kreise für die einzelnen Sprachen dargestellt. Beim Mittellaut M des dargestellten hidden Markov Modells ist beispielsweise eine Wahrscheinlichkeitsdichte in einer solchen Region als WDP bezeichnet. Die Erkennungsraten für ein komplettes multilinguales Spracherkennungssystem sind dabei in Spalte 4 und 5 der Tabelle 2 als ML1 und ML2 angegeben.

| Language | #Tokens | LDP[%] | ML1[%] | ML2[%] |
|---|---|---|---|---|
| English | 21191 | 39.0 | 37.3 | 37.0 |
| German | 9430 | 40.0 | 34.7 | 37.7 |
| Spanish | 9525 | 53.9 | 46.0 | 51.6 |
| Total | 40146 | 42.8 | 38.8 | 40.8 |

Während bei der ersten Untersuchung ML1 die konventionelle Polyphonem-Definition aus [6] verwendet wurde, was bedeutet, daß der komplette akustische Bereich des Polyphonem-Modells bestehend aus der äußeren Kontur der Sprachbereiche in Figur 1, für die Erkennung verwendet wurde, benutzt die erfindungsgemäße Methode lediglich einen Teilbereich daraus. Indem die teilweise Überlappung der einzelnen Sprachbereiche für die einzelne Modellierung des Polyphonem-Modells herangezogen wird, ist beispielsweise eine Verbesserung von 2 % erzielbar, wie dies in Tabelle 2 in der Spalte für ML2 dargestellt ist.

Literatur:

[1] V. Digalakis A. Sankar, F. Beaufays.: "Training Data Clustering For Improved Speech Recognition.", In Proc. EUROSPEECH '95, pages 503 - 506, Madrid, 1995;
[2] P. Dalsgaard and 0. Andersen.: "Identification of Mono- and Poly-phonemes using acousitc-phonetic Features derived by a self-organising Neural Network.", In Proc. ICSLP '92, pages 547 - 550, Banff, 1992;

[3] A. Hauenstein and E. Marschall.: "Methods for Improved Speech Recognition Over the Telephone Lines.", In Proc. ICASSP '95, pages 425 - 428, Detroit, 1995 [4] J. L. Hieronymus.: "ASCII Phonetic Symbols for the World's Languages: Worldbet.", preprint, 1993;

[5] P. Ladefoged: "A Course in Phonetics.", Harcourt Brace Jovanovich, San Diego, 1993;

[6] P. Dalsgaard O. Andersen and W. Barry.: "Data-driven Identification of Poly- and Mono-phonemes for four European Languages.", In Proc. EUROSPEECH '93, pages 759 - 762, Berlin, 1993;

[7] A. Cole Y.K. Muthusamy and B.T. Oshika.: "The OGI Multi-language Telephone Speech Corpus.", In Proc. IC-SLP '92, pages 895 - 898, Banff, 1992;

**Patentansprüche**

1. Verfahren zur Mehrsprachenverwendung eines hidden Markov Lautmodelles in einem Spracherkennungssystem,

   a) bei dem ausgehend von mindestens einem ersten Merkmalsvektor für einen ersten Laut (L,M,R) in einer ersten Sprache (SP,EN,DE) und von mindestens einem zweiten Merkmalsvektor für einen vergleichbar gesprochenen zweiten Laut in mindestens einer zweiten Sprache (DE,SP,EN) und deren zugehörigen ersten und zweiten hidden Markov Lautmodellen, ermittelt wird welches der beiden hidden Markov Lautmodelle (L, M,R) beide Merkmalsvektoren besser hinsichtlich eines vorgegebenen Kriteriums beschreibt,

   b) und bei dem dieses hidden Markov Lautmodell (L,M,R) für die Modellierung des Lautes in mindestens beiden Sprachen (SP,EN,DE) verwendet wird.

2. Verfahren nach Anspruch 1, bei dem als Maß für die Beschreibung eines Merkmalsvektors durch ein hidden Markov Lautmodell (L,M,R) der logarithmische Wahrscheinlichkeitsabstand als log likelihood distance zwischen jedem hidden Markov Lautmodell und mindestens einem Merkmalsvektor gebildet wird, wobei eine kürzerer Abstand eine bessere Beschreibung bedeutet.

3. Verfahren nach Anspruch 2, bei dem als Maß für die Beschreibung der Merkmalsvektoren durch die hidden Markov Lautmodelle der arithmetische Mittelwert der logarithmischen Wahrscheinlichkeitsabstände bzw. der log likelihood distances zwischen jedem hidden Markov Lautmodell (L,M,R) und jedem jeweiligen Merkmalsvektor gebildet wird, wobei eine kürzerer Abstand eine bessere Beschreibung bedeutet.

4. Verfahren nach Anspruch 3, bei dem das erste hidden Markov Lautmodell (L,M,R) von einem Phonem $\lambda_i$ und das zweite hidden Markov Lautmodell von einem Phonem $\lambda_j$ verwendet wird und bei dem als erste und zweite Merkmalsvektoren $X_i$ und $X_j$ verwendet werden, wobei der logarithmische Wahrscheinlichkeitsabstand zum ersten Merkmalsvektor gemäß

$$d\,(\lambda_i,\lambda_j)\; = \log p\,(X_i|\lambda_i)\; - \log p\,(X_i|\lambda_j) \tag{1}$$

bestimmt wird und der logarithmische Wahrscheinlichkeitsabstand zum zweiten Merkmalsvektor gemäß

$$d\,(\lambda_j,\lambda_i)\; = \log p\,(X_j|\lambda_j)\; - \log p\,(X_j|\lambda_i) \tag{2}$$

bestimmt wird, wobei zur Erzielung eines symmetrischen Abstandsmaßes der arithmetische Mittelwert zu

$$d\,(\lambda_j;\lambda_i)\; = \frac{1}{2}\,(d\,(\lambda_i,\lambda_j)\; + d\,(\lambda_j;\lambda_i)\,) \tag{3}$$

5. Verfahren nach Anspruch 4,
   bei dem dieses hidden Markov Lautmodell (L,M,R) für die Modellierung des Lautes in mindestens beiden Sprachen nur verwendet wird, falls

$$d\,(\lambda_j;\lambda_i)$$

eine festgelegte Schrankenbedingung erfüllt.

6. Verfahren zur Mehrsprachen Verwendung eines hidden Markov Lautmodelles in einem Spracherkennungssystem,

a) bei dem ausgehend von mindestens einem ersten hidden Markov Lautmodell (L,M,R) für einen ersten Laut in einer ersten Sprache (SP,EN,DE) und von mindestens einem zweiten hidden Markov Lautmodell (L,M,R) für einen vergleichbar gesprochenen zweiten Laut in mindestens einer zweiten Sprache (DE,SP,EN), ein Poly Phonem hidden Markov Modell derart gebildet wird, daß die für die Modellierung des ersten und zweiten hidden Markov Lautmodelles (L,M,R) verwendeten Standardwahrscheinlichkeitsverteilungen (WD) bis zu einem festgelegten Abstandsschwellenwert, der angibt bis zu welchem maximalen Abstand zwischen zwei Standardwahrscheinlichkeitsverteilungen (WD) diese zusammengefügt werden sollen zu jeweils einer neuen Standardwahrscheinlichkeitsverteilung (WDP) zusammengefügt werden und lediglich die zusammengefügten Standardwahrscheinlichkeitsverteilungen das Poly Phonem hidden Markov Modell charakterisieren
b) und bei dem dieses Poly Phonem hidden Markov Modell für die Modellierung des Lautes in mindestens beiden Sprachen (DE,SP,EN) (L,M,R) verwendet wird.

7. Verfahren nach Anspruch 6,
bei dem als Abstandsschwellenwert 5 festgelegt wird.

8. Verfahren nach einem der vorangehenden Ansprüche , bei dem hidden Markov Lautmodelle mit drei Zuständen verwendet werden, welche aus den Lautsegmenten Anlaut, Mittellaut und Ablaut gebildet werden.

**Claims**

1. Method for the multilingual use of a hidden Markov sound model in a speech recognition system,

a) in which, starting from at least one first feature vector for a first sound (L, M, R) in a first language (SP, EN, DE) and from at least one second feature vector for a comparably spoken second sound in at least one second language (DE, SP, EN) and their associated first and second hidden Markov sound models, it is determined which of the two hidden Markov sound models (L, M, R) describes the two feature vectors better with regard to a prescribed criterion,
b) and in which this hidden Markov sound model (L, M, R) is used for modelling the sound in at least both languages (SP, EN, DE).

2. Method according to Claim 1, in which as a measure of the description of a feature vector by a hidden Markov sound model (L, M, R) the logarithmic likelihood distance is formed as logarithmic likelihood distance between each hidden Markov sound model and at least one feature vector, a shorter distance signifying a better description.

3. Method according to Claim 2, in which as a measure of the description of the feature vectors by the hidden Markov sound models the arithmetic mean value of the logarithmic likelihood distances or of the logarithmic likelihood distances between each hidden Markov sound model (L, M, R) and each respective feature vector is formed, a shorter distance signifying a better description.

4. Method according to Claim 3, in which use is made of the first hidden Markov sound model (L,M,R) of a phoneme $\lambda_i$ and of the second hidden Markov sound model of a phoneme $\lambda_j$, and in which $X_i$ and $X_j$ are used as the first and second feature vectors, the logarithmic likelihood distance being determined in relation to the first feature vector in accordance with

$$d(\lambda_i, \lambda_j) = \log p(X_i|\lambda_i) - \log p(X_i|\lambda_j) \tag{1}$$

and the logarithmic likelihood distance being determined in relation to the second feature vector in accordance with

$$d(\lambda_j, \lambda_i) = \log p(X_j|\lambda_j) - \log p(X_j|\lambda_i) \tag{2}$$

7

in which in order to achieve a symmetrical distance measure the arithmetic mean value is yielded as

$$d(\lambda_j, \lambda_i) = \frac{1}{2}(d(\lambda_i, \lambda_j) + d(\lambda_j, \lambda_i)) \tag{3}$$

**5.** Method according to Claim 4, in which this hidden Markov sound model (L, M, R) is only used to model the sound in at least both languages if $d(\lambda_j, \lambda_i)$ satisfies a fixed boundary condition.

**6.** Method for the multilingual use of a hidden Markov sound model in a speech recognition system,

a) in which, starting from at least one first hidden Markov sound model (L, M, R) for a first sound in a first language (SP, EN, DE) and from at least one second hidden Markov sound model (L, M, R) for a comparably spoken second sound in at least one second language (DE, SP, EN), a polyphoneme hidden Markov model is formed in such a way that the standard likelihood distributions (WD) used for modelling the first and second hidden Markov sound model (L, M, R) are combined to form respectively a new standard likelihood distribution (WDP) up to a fixed distance threshold value which specifies up to which maximum distance between two standard likelihood distributions (WD) they are to be combined, and only the combined standard likelihood distributions characterize the polyphoneme hidden Markov model,
b) and in which this polyphoneme hidden Markov model (L, M, R) is used to model the sound in at least both languages (DE, SP, EN).

**7.** Method according to Claim 6, in which 5 is fixed as the distance threshold value.

**8.** Method according to one of the preceding claims, in which use is made of hidden Markov sound models having three states which are formed from the sound segments of initial sound, middle sound and final sound.

**Revendications**

**1.** Procédé pour l'utilisation multilingue d'un modèle sonore markovien caché dans un système de reconnaissance vocale,

a) dans lequel, à partir d'au moins un premier vecteur caractéristique pour un premier son (L, M, R) dans une première langue (SP, EN, DE) et d'au moins un deuxième vecteur caractéristique pour un deuxième son prononcé de manière comparable dans au moins une deuxième langue (DE, SP, EN) et leur premier et deuxième modèles sonores markoviens cachés associés, on détermine le modèle (L, M, R) sonore markovien caché parmi les deux modèles sonores markoviens cachés qui décrit le mieux les deux vecteurs caractéristiques en fonction d'un critère prescrit,
b) et dans lequel on utilise ce modèle (L, M, R) sonore markovien caché pour la modélisation du son dans au moins deux langues (SP, EN, DE).

**2.** Procédé suivant la revendication 1, dans lequel on forme comme mesure pour la description d'un vecteur caractéristique par un modèle (L, M, R) sonore markovien caché la distance de probabilité logarithmique comme log likelihood distance entre chaque modèle sonore markovien caché et au moins un vecteur caractéristique, une distance plus courte signifiant une meilleure description.

**3.** Procédé suivant la revendication 2, dans lequel on forme comme mesure pour la description des vecteurs caractéristiques par les modèles sonores markoviens cachés la moyenne arithmétique des distances de probabilité logarithmique ou des log likelihood distances entre chaque modèle (L, M, R) sonore markovien caché et chaque vecteur caractéristique associé, une distance plus courte signifiant une meilleure description.

**4.** Procédé suivant la revendication 3, dans lequel on utilise le premier modèle (L, M, R) sonore markovien caché d'un phonème $\lambda_i$ et le deuxième modèle sonore markovien caché d'un phonème $\lambda_j$ et dans lequel on utilise comme premier et deuxième vecteur caractéristique $X_i$ et $X_j$, la distance de probabilité logarithmique au premier vecteur caractéristique étant déterminée suivant :

$$d(\lambda_i, \lambda_j) = \log p(X_i | \lambda_i) - \log p(X_i | \lambda_j) \qquad (1)$$

et la distance de probabilité logarithmique au deuxième vecteur caractéristique étant déterminée suivant :

$$d(\lambda_j, \lambda_i) = \log p(X_j | \lambda_j) - \log p(X_j | \lambda_i) \qquad (2)$$

et on utilise :

$$d(\lambda_j; \lambda_i) = \frac{1}{2}(d(\lambda_i, \lambda_j) + d(\lambda_j; \lambda_i)) \qquad (3)$$

pour obtenir une mesure de distance symétrique de la moyenne arithmétique.

**5.** Procédé suivant la revendication 4, dans lequel on n'utilise ce modèle (L, M, R) sonore markovien caché pour la modélisation du son dans au moins deux langues que dans le cas où $d(\lambda_j, \lambda_i)$ satisfait une condition de limite fixée.

**6.** Procédé pour l'utilisation multilingue d'un modèle sonore markovien caché dans un système de reconnaissance vocale,

a) dans lequel, à partir d'au moins un premier modèle (L, M, R) sonore markovien caché pour un premier son dans une première langue (SP, EN, DE) et à partir d'au moins un deuxième modèle (L, M, R) sonore markovien caché pour un deuxième son prononcé de manière comparable dans au moins une deuxième langue (DE, SP, EN), on forme un modèle markovien caché polyphonème de manière que les distributions (WD) de probabilité normalisée utilisées pour la modélisation du premier et du deuxième modèles (L, M, R) sonores markoviens cachés soient assemblées, jusqu'à une valeur seuil de distance fixée qui indique jusqu'à quelle valeur maximum entre deux distributions (WD) de probabilité normalisée celles-ci doivent être assemblées, chaque fois en une nouvelle distribution (WDP) de probabilité normalisée et que seules les distributions de probabilité normalisées assemblées caractérisent le modèle markovien caché polyphonème,
b) et dans lequel on utilise ce modèle markovien caché polyphonème pour la modélisation du son dans au moins deux langues (DE, SP, EN).

**7.** Procédé suivant la revendication 6, dans lequel on fixe 5 comme valeur seuil de distance.

**8.** Procédé suivant l'une des revendications précédentes, dans lequel on utilise des modèles sonores markoviens cachés à trois états qui sont formés à partir des segments de son : son initial, son médian et son final.

Fig. 1